# EUROPÄISCHE PATENTSCHRIFT

(11) **EP 2 647 108 B1**
(45) Veröffentlichungstag und Bekanntmachung des Hinweises auf die Patenterteilung: **05.11.2014**
(21) Anmeldenummer: 11788846.1
(22) Anmeldetag: 30.11.2011
(51) Int. Cl.: H02K 15/04, H02K 3/12

(54) **VERFAHREN ZUM PRÄGEN VON SPULENSEITEN EINER STÄNDERWICKLUNG**
METHOD FOR STAMPING COIL SIDES OF A STATOR WINDING
PROCÉDÉ D'ESTAMPAGE DE CÔTÉS DE BOBINES D'UN ENROULEMENT DE STATOR

(30) Priorität: 01.12.2010 DE 102010053716
(43) Veröffentlichungstag der Anmeldung: 09.10.2013
(73) Patentinhaber: Robert Bosch GmbH, 70442 Stuttgart (DE)
(72) Erfinder: DIDRA, Steffen, 71679 Asperg (DE); PFLUEGER, Klaus, 71735 Eberdingen (DE); HENNE, Martin, 71696 Moeglingen (DE); HERBOLD, Klaus, 71679 Asperg (DE); SCHWARZKOPF, Christoph, 74399 Walheim (DE); KREUZER, Helmut, 71701 Schwieberdingen (DE)
(86) Internationale Anmeldenummer: PCT/EP2011/071417
(87) Internationale Veröffentlichungsnummer: WO 2012/072695

(56) Entgegenhaltungen:
- EP-A1- 1 578 002
- WO-A1-01/54254
- DE-A1-102005 048 094
- DE-A1-102007 034 322

## Beschreibung

### Stand der Technik

Bei der Auslegung der Nutgeometrie im Ständereisen von elektrischen Maschinen ist der elektrische Füllfaktor d.h. der Quotient aus Kupferfläche zu Nutfläche ein entscheidender Parameter für die Beschreibung der Leistungsfähigkeit bzw. des Wirkungsgrades des Gesamtsystems. Übliche Ständer-Herstellverfahren, wie z.B. das Einzugsverfahren ermöglichen Werte von 40% bis maximal 50% elektrische Füllung.
Zur weiteren Steigerung dieser Werte können die Drähte im Nutbereich durch einen Prägevorgang verdichtet werden, siehe beispielsweise WO-2001054254 A1. Damit lässt sich der Bereich von über 60% elektrische Füllung in den Ständernuten erreichen. Vorausgesetzt bestimmte konstruktive Abhängigkeiten werden berücksichtigt (z.B. kompakte Ausführung der Wickelköpfe, ...), kann so mit weniger Materialeinsatz mehr elektrische Leistung in kleinerem Bauvolumen erzeugt werden.

Bei der technischen Umsetzung des Prägevorgangs sind bestimmte Randbedingungen von entscheidender Bedeutung: So können z.B. Drahtkreuzungen im Nutbereich zu Quetschungen mit stark reduziertem Querschnitt führen, die im Betrieb durch erhöhten ohmschen Widerstand zu lokalen Überhitzungen mit entsprechenden Folgen führen.
Hohe elektrische Füllfaktoren werden insbesondere durch hohe mechanische Füllung in den Prägewerkzeugen ermöglicht, deshalb wird unter Berücksichtigung der möglichen Drahttoleranzen eine Füllung der Prägenut nahe 100% angestrebt. Dies setzt allerdings voraus, dass alle Drähte im Nutbereich möglicht gleichmäßig verformt werden.

Bei ungünstiger Wahl der Prägerichtung ist diese Voraussetzung nicht erfüllt. Wird der Draht in radialer Richtung (in Nuthöhenrichtung) geprägt, so wird der Draht, welcher mit Kontakt zum Prägestempel hat, im Vergleich zum Draht im Prägenutgrund überproportional stark deformiert, weil sich der Prägedruck durch mechanische Reibung und andere Einflüsse nicht gleichmäßig innerhalb der Nut verteilt. Aus der DE 10 2007 034 322 A1, der DE10 2005 048 094 A1 und der EP 1 578 002 A1 ist bekannt Spulenseiten in einer Nutreihe und mit einem Winkel Null zu der Nutreihe umzuformen.

Rein rechnerisch stellt sich am Prägestempel eine Prägenut-Füllung größer 100% ein. Als Folge wird Kupfer in Längsrichtung des Drahtes in die Wickelköpfe und somit in den elektromagnetisch nicht aktiven Bereich der Maschine verschoben. Der Draht lässt sich so nicht optimiert prägen.

### Offenbarung der Erfindung

### Beschreibung der Zeichnungen

Die Erfindung wird im Folgenden beispielhaft an Hand der Figuren näher erläutert. Es zeigen:
- Figur 1: einen Längsschnitt durch eine elektrische Maschine,
- Figur 2: eine Reihe Runddrähte bzw. Spulenseiten, die parallelflankig umgeformt werden sollen,
- Figur 3: eine Reihe ehemaliger Runddrähte, die parallelflankig umgeformt wurden und nach Isolation in eine Nut eingesetzt wurden,
- Figur 4: eine Reihe Runddrähte bzw. Spulenseiten, die trapezförmig umgeformt werden sollen,
- Figur 5: zwei halbe Reihen an Runddrähten bzw. Spulenseiten, die parallelflankig umgeformt werden sollen,
- Figur 6: vier halbe Reihen bzw. zwei halbe ganze Reihen an Runddrähten bzw. Spulenseiten mit gerader Spulenseitenzahl, die trapezförmig umgeformt werden sollen,
- Figur 7: vier Teilreihen bzw. zwei geteilte ganze Reihen an Runddrähten bzw. Spulenseiten mit ungerader Spulenseitenzahl/Reihe, die trapezförmig umgeformt werden sollen.

Die in den Figuren dargestellte Hüllkurve stellt die zu erreichende Kontur der Reihen nach dem Umformen dar.

### Ausführungsformen der Erfindung

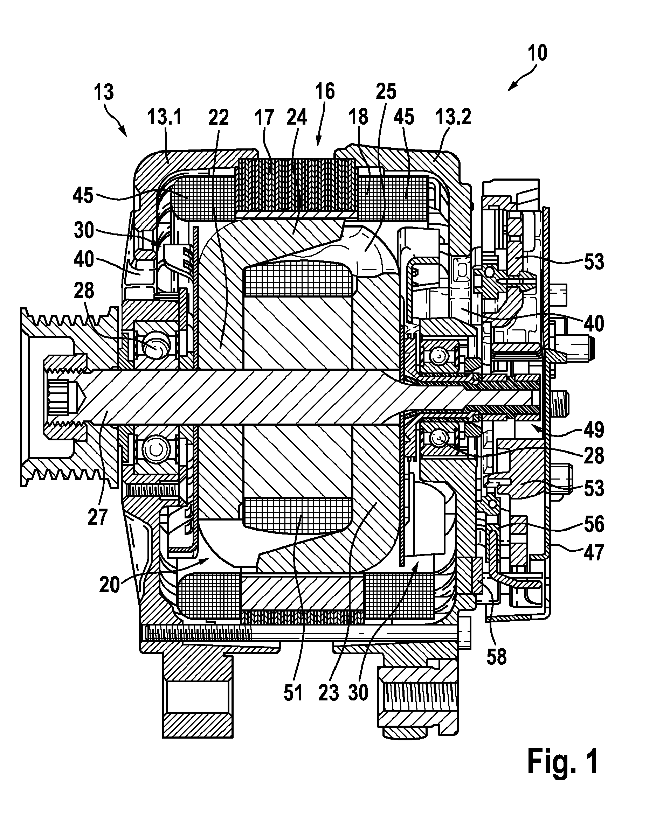

In Figur 1 ist ein Längsschnitt durch eine elektrische Maschine 10, hier in der Ausführung als Generator bzw. Wechselstromgenerator für Kraftfahrzeuge, dargestellt. Diese elektrische Maschine 10 weist u. a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u. a. aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurch treten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

### Beschreibung des Umformens

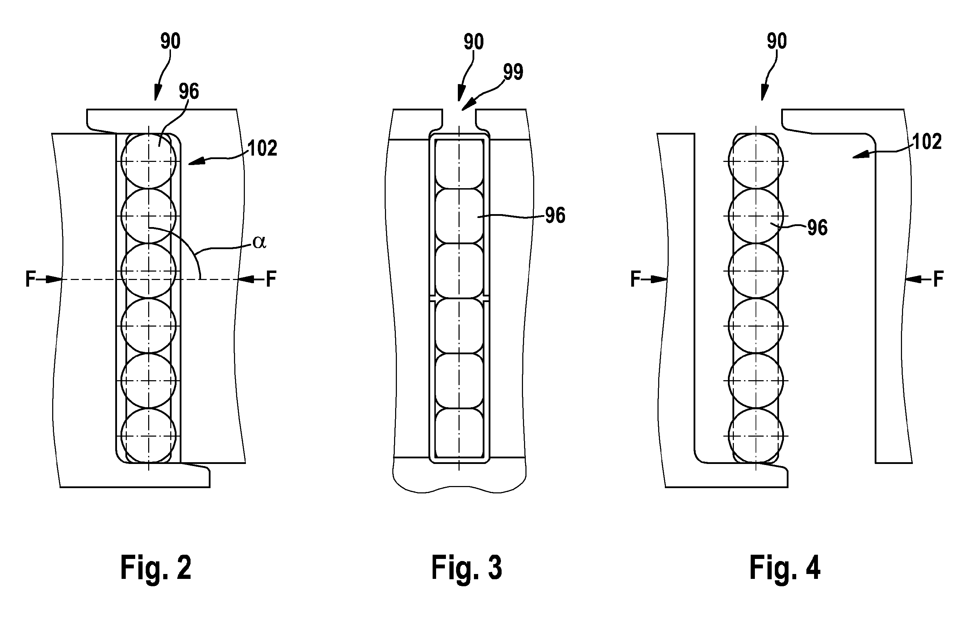

In Figur 2 ist eine Nutreihe 90 von Runddrähten 93 bzw. Spulenseiten 96, die parallelflankig umgeformt werden sollen, dargestellt. Bei angestrebter parallelflankiger Nutgeometrie, s. a. Figur 3 mit einer Nut 99, werden alle Runddrähte 93 gleichmäßig verformt, entsprechend kann die Füllung der Nut 99 gleichmäßig hoch ausgelegt werden. Drahtbeschädigungen sind nicht zu erwarten. Es ist ein Verfahren zum Prägen von mehreren Spulenseiten 96 für eine Ständerwicklung 18 vorgesehen, wobei die mehreren Spulenseiten 96 in einer Nutreihe 90 angeordnet werden, wobei mit einer Kraft F umgeformt wird, deren Kraftrichtung einen Winkel α zu der Nutreihe 90 aufweist, der größer Null ist. Der Winkel α ist nahezu oder 90°. Die Nutreihe 90 definiert eine Richtung, in der die Runddrähte 93 gestapelt sind. Der Winkel α geht von dieser Richtung aus.

Bezüglich der Richtung der aufeinander gerichteten Kräfte F kann alternativ auch vorgesehen sein, dass die Kräfte F so ausgerichtet sind, dass diese diagonal durch die Nutreihe 90 wirkt. Mit Bezug auf das in Figur 3 dargestellte Ergebnis bedeutet dies, dass die Kräfte bspw. einerseits vom Nutgrund links unten und andererseits von der Nutschlitzseite rechts oben wirken. Hilfsweise ist vorgesehen, dass die Kräfte F in einem Winkel α > 45° auf einander wirken. Die Betrachtungen dieses Absatzes gelten auch für trapezförmige Nutgeometrien.

Bei Verwendung von trapezförmigen Nutgeometrien, Figur 4, treten auch bei einer tangentialen Prägung in eine Prägekammer 102 ähnliche Probleme wie bei der radialen Prägung auf. Im oberen schmalen Bereich der Prägekammer 102 sind die Verformungen nicht ideal, im breiten Bereich der Nut 99 (unten) ebenfalls nicht ideal.

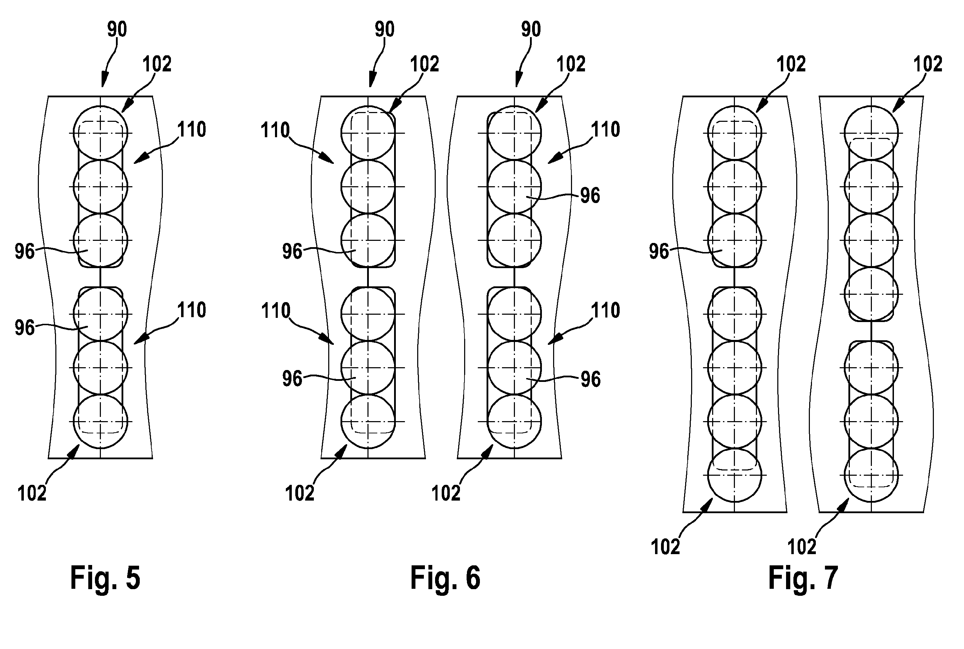

In Figur 5, 6 und 7 ist dargestellt, wie Ständerwicklungen bzw. Reihen 90 von Runddrähten 93 bzw. Spulenseiten 96 in zwei Prägekammern 102 geprägt werden. Durch gleichmäßig hohe mechanische Füllung in den Kammern können optimierte elektromagnetische Auslegungen mit elektrischen Füllfaktoren größer 60% umgesetzt werden. Insbesondere Ständernutauslegungen mit trapezförmigen Nutformen profitieren von diesem Prinzip.

Durch Einsatz von zwei Prägekammern 102 kann eine gleichmäßige mechanische Füllung der Prägenuten erreicht werden. Dies ermöglicht unter Berücksichtigung der möglichen Drahttoleranzen einen Füllgrad der Prägenut nahe 100%. Optimierte elektromagnetische Auslegungen mit elektrischen Füllgraden größer 60% werden so möglich (siehe Figur 5).

Es ist ein Verfahren vorgesehen, wobei die Spulenseiten 96 in mehreren Teilreihen 110 angeordnet sind, wobei mehrere Teilreihen 110 eine Nutreihe 90 bilden.

Es ist gemäß Figur 6 und 7 ein Verfahren vorgesehen, wobei die Spulenseiten 96 in mehreren Teilreihen 110 angeordnet sind, wobei mehrere Teilreihen 110 eine Nutreihe 90 bilden und pro Nut 99 mehrere Nutreihen 90 vorgesehen sind. Die Teilreihen 110 einer Nutreihe 90 weisen eine unterschiedliche Zahl an Spulenseiten 96 auf.

Die Teilreihen 110 werden in voneinander getrennten Prägekammern 102 geprägt.

Rechnerische Prägenut-Füllungen größer 100% in Teilbereichen der Nut werden mit zwei Prägekammern vermieden. Unzulässige Verformungen an einzelnen Drähten treten nicht mehr auf, es wird kein Kupfer in Längsrichtung (senkrecht zur Darstellungsebene) in die elektromagnetisch nicht aktiven Wickelköpfe verschoben. D.h. die berechnete optimierte Auslegung kommt auch in Wirklichkeit zur Anwendung.

Insbesondere können mit zwei getrennten Prägekammern auch Auslegungen mit trapezförmigen Nuten umgesetzt werden. Ausgleichsbewegungen zwischen dem schmalen und breiten Bereich der Prägekammer sind nicht notwendig. Schwer beherrschbare Einflüsse wie z.B. die Reibung innerhalb der Prägekammer haben keinen Einfluss auf die Ausführungsqualität. Eine Beschränkung bezüglich der Nutform liegt hierbei nicht vor, insbesondere sind unterschiedliche Trapezformen machbar.

Das vorgeschlagene Prinzip lässt sich für verschiedene Auslegungen anwenden. Es können sowohl einreihige Drahtanordnungen wie z.B. bei einem 5-Phasen-System mit 80 Nuten (siehe Figur 5), wie auch doppelreihige Anordnungen wie z.B. bei einem 3-Phasen-System mit 48 Nuten (siehe Figur 6) realisiert werden. Weitere mehrreihige Anordnungen sind prinzipiell denkbar, die Nutzahl bzw. die Polzahl der Auslegung sind dabei beliebig. Darüber hinaus können bei entsprechender Berechnung der Prägekammerflächen auch Auslegungen mit ungerader Leiterzahl gebaut werden (siehe Figur 7).

Das Prägen in zwei Kammern erzeugt eine eindeutige und vor allem reproduzierbare Trennebene zwischen Nutober- bzw. -unterlage. Unterschiedliche Bedingungen innerhalb der Prägenut, wie z.B. Reibung, Drahtfestigkeit oder Drahtdurchmesser haben keinen Einfluss auf diese Trennebene. Dies kann bei nachfolgenden Prozessschritten von großem Vorteil sein: Z. B. kann ein Schränkvorgang der Spulenelemente entlang dieser Trennebene erfolgen.

Es ist ein Stator mit einer Ständerwicklung (18) vorgesehen, welche nach einem der hier vorgestellten Verfahrensschritte gefertigt ist.

## Patentansprüche

1. Verfahren zum Prägen von mehreren Spulenseiten (96) für eine Ständerwicklung (18), **dadurch gekennzeichnet, dass** die mehreren Spulenseiten (96) in einer Nutreihe (90) angeordnet werden, wobei mit einer Kraft (F) umgeformt wird, deren Kraftrichtung einen Winkel (α) zu der Nutreihe (90) aufweist, der größer Null ist, so dass alle Spulenseiten im Nutbereich möglichst gleichmäßig verformt werden.

2. Verfahren nach Anspruch 1, **dadurch gekennzeichnet, dass** die Spulenseiten (96) in mehreren Teilreihen (110) angeordnet sind, wobei mehrere Teilreihen (110) eine Nutreihe (90) bilden.

3. Verfahren nach Anspruch 2, **dadurch gekennzeichnet, dass** die Spulenseiten (96) in mehreren Teilreihen (110) angeordnet sind, wobei mehrere Teilreihen (110) eine Nutreihe (90) bilden und pro Nut (99) mehrere Nutreihen (90) vorgesehen sind.

4. Verfahren nach Anspruch 2 oder 3, **dadurch gekennzeichnet, dass** die Teilreihen (110) einer Nutreihe (90) eine unterschiedliche Zahl an Spulenseiten (96) aufweisen.

5. Verfahren nach einem der vorstehenden Ansprüche, **dadurch gekennzeichnet, dass** Teilreihen (110) in voneinander getrennten Prägekammern (102) geprägt werden.

6. Stator mit einer Ständerwicklung (18), welche nach einem der Ansprüche 1 bis 4 gefertigt ist.

7. Elektrische Maschine (10) mit einem Stator (16) nach Anspruch 6.

## Claims

1. Method for stamping a plurality of coil sides (96) for a stator winding (18), **characterized in that** the plurality of coil sides (96) are arranged in a slot row (90), wherein shaping is performed by means of a force (F), the direction of this force being at an angle (α) of greater than zero in relation to the slot row (90), so that all the coil sides in the slot region are deformed as uniformly as possible.

2. Method according to Claim 1, **characterized in that** the coil sides (96) are arranged in a plurality of row elements (110), wherein a plurality of row elements (110) form a slot row (90).

3. Method according to Claim 2, **characterized in that** the coil sides (96) are arranged in a plurality of row elements (110), wherein a plurality of row elements (110) form a slot row (90) and a plurality of slot rows (90) are provided for each slot (99).

4. Method according to Claim 2 or 3, **characterized in that** the row elements (110) of a slot row (90) have a different number of coil sides (96).

5. Method according to one of the preceding claims, **characterized in that** row elements (110) are stamped in stamping chambers (102) which are separated from one another.

6. Stator having a stator winding (18) which is produced according to one of Claims 1 to 4.

7. Electrical machine (10) having a stator (16) according to Claim 6.

## Revendications

1. Procédé d'estampage de plusieurs côtés de bobines (96) pour un enroulement de stator (18), **caractérisé en ce que** les plusieurs côtés de bobines (96) sont disposés dans une rangée de rainure (90), le façonnage étant effectué à l'aide d'une force (F) dont la direction forme avec la rangée de rainure (90) un angle (α) qui est supérieur à zéro, de sorte que tous les côtés de bobines soient déformés aussi uniformément que possible dans la région de rainure.

2. Procédé selon la revendication 1, **caractérisé en ce que** les côtés de bobines (96) sont disposés dans plusieurs rangées partielles (110), plusieurs rangées partielles (110) formant une rangée de rainure (90).

3. Procédé selon la revendication 2, **caractérisé en ce que** les côtés de bobines (96) sont disposés dans plusieurs rangées partielles (110), plusieurs rangées partielles (110) formant une rangée de rainure (90) et plusieurs rangées de rainure (90) étant prévues pour chaque rainure (99).

4. Procédé selon la revendication 2 ou 3, **caractérisé en ce que** les rangées partielles (110) d'une rangée de rainure (90) comprennent un nombre différent de côtés de bobines (96).

5. Procédé selon l'une quelconque des revendications précédentes, **caractérisé en ce que** des rangées partielles (110) sont estampées dans des chambres d'estampage (102) séparées les unes des autres.

6. Stator comprenant un enroulement de stator (18), lequel est fabriqué selon l'une quelconque des revendications 1 à 4.

7. Machine électrique (10) comprenant un stator (16) selon la revendication 6.
